# EUROPEAN PATENT APPLICATION

(11) **EP 4 542 717 A1**
(43) Date of publication of application: **23.04.2025**
(21) Application number: 23873152.5
(22) Date of filing: 26.09.2023
(51) Int. Cl.: H01M 10/0583, H01M 50/463, H01M 50/466, H01M 10/0525, H01M 4/131, H01M 4/133, H01M 4/66, H04M 1/02

(54) **BATTERY AND ELECTRONIC DEVICE INCLUDING BATTERY**

(30) Priority: 27.09.2022 KR 20220122613; 21.10.2022 KR 20220136792
(71) Applicant: Samsung Electronics Co., Ltd., Suwon-si, Gyeonggi-do 16677 (KR)
(72) Inventor: CHU, Jungho, Suwon-si Gyeonggi-do 16677 (KR); KIM, Shihyun, Suwon-si Gyeonggi-do 16677 (KR); PARK, Seonyoung, Suwon-si Gyeonggi-do 16677 (KR); PARK, Tari, Suwon-si Gyeonggi-do 16677 (KR); JANG, Kiyoun, Suwon-si Gyeonggi-do 16677 (KR); JUNG, Sinyoung, Suwon-si Gyeonggi-do 16677 (KR)
(74) Representative: Gulde & Partner
(86) International application number: PCT/KR2023/014908
(87) International publication number: WO 2024/072041

(57) **Abstract**

This electronic device may comprise a processor and a battery configured to supply power to the processor. The battery may include: a plurality of first electrodes including first tabs protruding in a first direction; a plurality of second electrodes including second tabs protruding in the first direction; and separators configured to prevent contact between the plurality of first electrodes and the plurality of second electrodes. The separators may include: first separators that are rolled in a second direction perpendicular to the first direction and include a plurality of through-holes accommodating the first tabs and the second tabs; and second separators that are rolled in the first direction and alternately stacked with the first separators. Various other embodiments may also be possible.

## Description

### [Technical Field]

Various embodiments of the disclosure relate to a battery and an electronic device including a battery.

### [Background Art]

In line with development of information/communication technologies and semiconductor technologies, various functions have been integrated in a single portable electronic device. For example, an electronic device may implement not only a communication function, but also an entertainment function (for example, gaming), a multimedia function (for example, music/video playback), communication and security functions for mobile banking, a scheduling function, and an electronic wallet function. Such electronic devices have become compact such that users can conveniently carry the same.

As electronic devices have been used in daily life, user demands for portability and usability of electronic devices may increase. According to such user demands, secondary batteries which are chargeable or dischargeable have been utilized as power sources of electronic devices, for example.

### [Detailed Description of the Invention]

### [Technical Solution]

According to an embodiment of the disclosure, an electronic device may include a processor, and a battery configured to supply power to the processor. The battery may include multiple first electrodes including first tabs configured to protrude toward a first direction, multiple second electrodes including second tabs configured to protrude toward the first direction, and a separator configured to restrict contact between the multiple first electrodes and the multiple second electrodes. The separator may include a first separator configured to be folded in a second direction perpendicular to the first direction or a fourth direction opposite to the second direction configured to be folded in a second direction perpendicular to the first direction or a fourth direction opposite to the second direction, the first separator including multiple through-holes configured to accommodate the first tabs and the second tabs, and a second separator configured to be folded in the first direction or a third direction opposite to the first direction to the first direction, the second separator being alternately stacked with the first separator.

According to an embodiment of the disclosure, a battery may include multiple first electrodes including first tabs configured to protrude toward a first direction, multiple second electrodes including second tabs configured to protrude toward the first direction, and a separator configured to restrict contact between the multiple first electrodes and the multiple second electrodes. The separator may include a first separator configured to be folded in a second direction perpendicular to the first direction or a fourth direction opposite to the second direction, the first separator including multiple through-holes configured to accommodate the first tabs and the second tabs, and a second separator configured to be folded in the first direction or a third direction opposite to the first direction, the second separator being alternately stacked with the first separator.

### BRIEF DESCRIPTION OF THE DRAWINGS

FIG. 1 is a block diagram of an electronic device in a network environment according to an embodiment of the disclosure.
FIG. 2 is a front perspective view of an electronic device according to an embodiment of the disclosure.
FIG. 3 is a rear perspective view of an electronic device according to an embodiment of the disclosure.
FIG. 4 is an exploded perspective view of an electronic device according to an embodiment of the disclosure,
FIG. 5 is a schematic view of a battery according to an embodiment of the disclosure.
FIGS. 6, 7a, 7b, 8, 9, 10, 11, 12, 13, 14, 15 and 16 are views showing a process of stacking first electrodes, second electrodes, and a separator of a battery according to an embodiment of the disclosure.
FIGS. 17a and 17b are a perspective view showing the front surface and the side surface of a battery in which first electrodes, second electrodes, and a separator are stacked according to an embodiment of the disclosure.
FIGS. 18a and 18b are a perspective view of a battery according to an embodiment of the disclosure.
FIG. 19 is a perspective view of a battery according to an embodiment of the disclosure.

### [Mode for Carrying out the Invention]

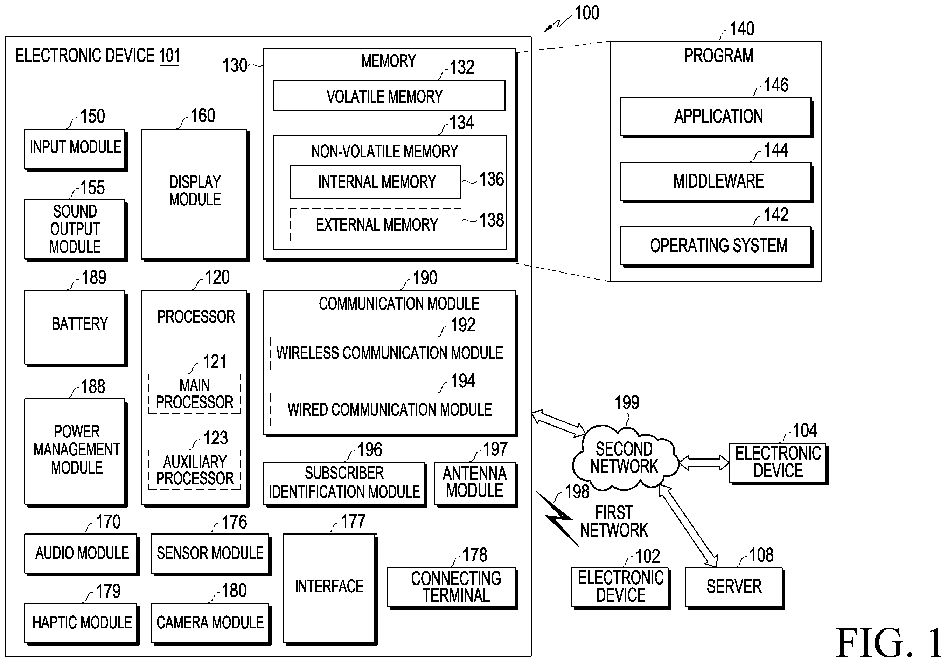

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include internal memory 136 and external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module may include an antenna including a radiating element implemented using a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," *"coupled to, " "connected with,"* or "connected to"another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

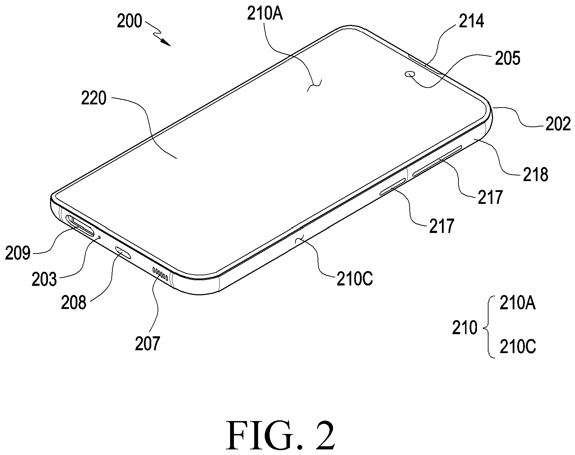

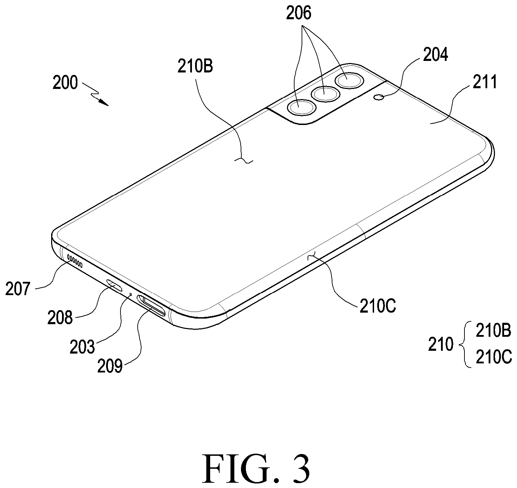

FIG. 2 is a front perspective view of an electronic device according to an embodiment of the disclosure. FIG. 3 is a rear perspective view of an electronic device according to an embodiment of the disclosure.

Referring to FIG. 2 and FIG. 3, an electronic device 200 (e.g., the electronic device 101 in FIG. 1) according to an embodiment may include a housing 210 including a front surface 210A, a rear surface 210B, and side surfaces 210C for surrounding a space between the front surface 210A and the rear surface 210B. In another embodiment (not shown), the housing 210 may also be referred to as a structure which forms a part of the front surface 210A in FIG. 2, and the rear surface 210B, and the side surfaces 210C in FIG. 3. For example, the housing 210 may include a front plate 202 and a rear plate 211. According to an embodiment, at least a portion of the front surface 210A may be formed by the front plate 202 (e.g., a polymer plate or a glass plate including various coating layers) which may be a substantially transparent. The rear surface 210B may be formed by the rear plate 211. For example, the rear plate 211 may be formed of glass, ceramic, polymer, metal (e.g., titanium (Ti), stainless steel (STS), aluminum (Al) and/or magnesium (Mg)), or at least a combination of two of the above materials. The side surfaces 210c may be coupled to the front plate 202 and the rear plate 211, and/or may be formed by a lateral bezel structure (or a "lateral member") 218 including metal and/or polymer. In some embodiments, the rear plate 211 and the lateral bezel structure 218 may be integrally formed, and may include the same material (e.g., glass, metal material such as aluminum, or ceramic). According to another embodiment, the front surface 210A and/or the front plate 202 may be integrated as part of a display 220.

According to an embodiment, the electronic device 200 may include at least one of the display 220, audio modules 203, 207, and 214 (e.g., the audio module 170 in FIG. 1), a sensor module (e.g., the sensor module 176 in FIG. 1), camera modules 205 and 206 (e.g., the camera module 180 in FIG. 1), a key input device 217 (e.g., the input module 150 in FIG. 1), and connector holes 208 and 209 (e.g., the connection terminal 178 in FIG. 1). In some embodiments, at least one (e.g., the connector hole 209) of elements may be omitted from the electronic device 200, and other components may be additionally included therein. According to an embodiment, for example, the display 220 may be visually exposed through a majority portion of the front plate 202.

According to an embodiment, a surface (or the front plate 202) of the housing 210 may include a screen display area, formed so that the display 220 is visually exposed. As an example, the screen display area may include the front surface 210A.

According to an embodiment, the electronic device 200 may include a recess or an opening part formed in a part of the screen display area (e.g., the front surface 210A) of the display 220, and may include at least one of the audio module 214, a sensor module (not shown), a light-emitting element (not shown), and a camera module 205 aligned with the recess or the opening part. In another embodiment (not shown), at least one of the audio module 214, a sensor module (not shown), the camera module 205, a fingerprint sensor (not shown), and a light-emitting element (not shown) may be included on the rear surface of the screen display area of the display 220.

According to an embodiment, the display 220 may be coupled to or disposed adjacent to a touch detection circuit, a pressure sensor capable of measuring the intensity (pressure) of touch, and/or a digitizer for detecting a magnetic field-type stylus pen.

According to an embodiment, for example, the audio modules 203, 207, and 214 may include a microphone hole 203 and speaker holes 207 and 214. The microphone hole 203 may have a microphone disposed therein in order to obtain external sound, and in an embodiment, multiple microphones may be arranged to be able to detect the direction of sound. The speaker holes 207 and 214 may include an external speaker hole 207 and a receiver hole 214 for phone calls. In an embodiment, the speaker holes 207 and 214 and the microphone hole 203 may be implemented as one hole, or a speaker (e.g., a piezo speaker) may be included therein without the speaker holes 207 and 214.

According to an embodiment, for example, a sensor module (not shown) may generate an electrical signal or a data value corresponding to an internal operation state of the electronic device 200 or an external environmental state. For example, a sensor module (not shown) may include a first sensor module (not shown) (e.g., a proximity sensor) and/or a second sensor module (not shown) (e.g., a fingerprint sensor) arranged on the front surface 210A of the housing 210. A sensor module (not shown) may include a third sensor module (not shown) (e.g., an HRM sensor) and/or a fourth sensor module (not shown) (e.g., a fingerprint sensor) arranged on the rear surface 210B of the housing 210. In some embodiments (not shown), the fingerprint sensor may be disposed on the rear surface 210B as well as the front surface 210A (e.g., the display 220) of the housing 210. The electronic device 200 may further a sensor module not illustrated, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor (not shown).

According to an embodiment, for example, the camera modules 205 and 206 may include a front camera module 205 disposed on the front surface 210A of the electronic device 200, and a rear camera module 206 disposed on the rear surface 210B, and/or a flash 204. The camera modules 205 and 206 each may include one lens or multiple lenses, an image sensor, and/or an image signal processor. For example, the flash 204 may include a light-emitting diode or a xenon lamp. In some embodiments, two or more lenses (an infrared camera, a wide-angle lens, and a telephoto lens) and image sensors may be arranged on one surface of the electronic device 200.

According to an embodiment, the key input device 217 may be disposed on the side surfaces 210C of the housing 210. In another embodiment, the electronic device 200 may not include a part or the whole of the key input device 217 mentioned above, and the key input device 217 not included therein may be implemented as a different type such as a soft key, on the display 220. According to an embodiment, at least a part of the key input device 217 may be positioned on the lateral bezel structure 218.

According to an embodiment, for example, a light-emitting element (not shown) may be disposed on the front surface 210A of the housing 210. For example, the light-emitting (not shown) may be configured to provide state information of the electronic device 200 in the form of light. In another embodiment, for example, the light-emitting element (not shown) may provide a light source operating in association with an operation of the front camera module 205. For example, the light-emitting element (not shown) may include an LED, an IR LED, and/or a xenon lamp.

According to an embodiment, for example, the connector holes 208 and 209 may include a first connector hole 208 capable of accommodating a connector (for example, a USB connector) for transmitting and receiving power and/or data to and from an external electronic device or a connector (for example, an earphone jack) for transmitting and receiving audio signals to and from an external electronic device, and/or a second connector hole 209 capable of accommodating a storage device (e.g., a subscriber identification module (SIM) card). According to an embodiment, the first connector hole 208 and/or the second connector hole 209 may be omitted.

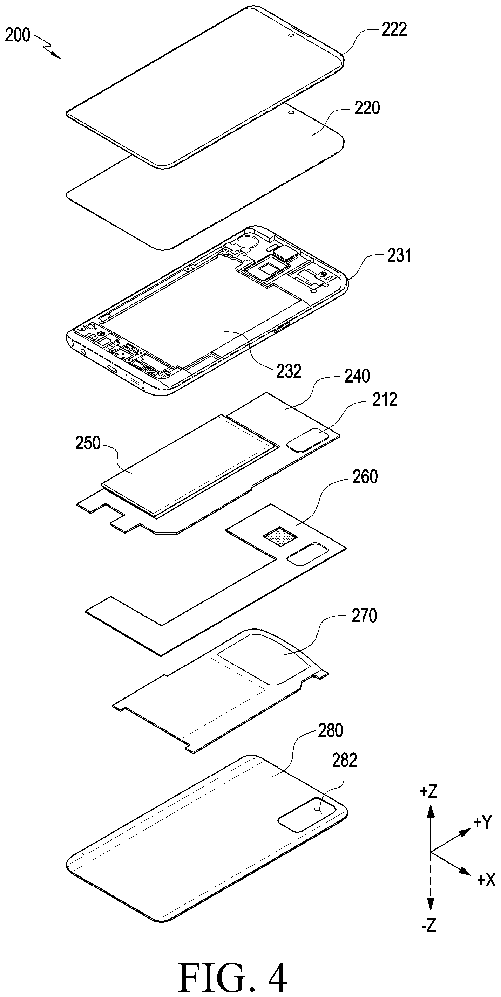

FIG. 4 is an exploded perspective view of an electronic device according to an embodiment of the disclosure,

Referring to FIG. 4, the electronic device 200 (e.g., the electronic device 200 in FIG. 2 and FIG. 3) may include at least one of a front plate 222 (e.g., the front plate 202 in FIG. 2), a display 220 (e.g., the display 220 in FIG. 2), a bracket 232 (e.g., a front support member), a printed circuit board 240, a battery 250, a rear case 260 (e.g., a rear support member), an antenna 270, and a rear plate 280 (e.g., the rear plate 211 in FIG. 3). According to an embodiment, at least one (e.g., the rear case 260) of elements may be omitted from the electronic device 200, and other elements may be additionally included therein. At least one of elements of the electronic device 200 may be the same as or similar to at least one of elements of the electronic device 200 in FIG. 2 or FIG. 3, and overlapping descriptions thereof will be omitted hereinafter.

The bracket 232 may be disposed inside the electronic device 200 so as to be connected to a lateral bezel structure 231, or may be integrally formed with the lateral bezel structure 231. For example, the bracket 232 may be formed of a metal material and/or a non-metal (e.g., polymer) material. The bracket 232 may have one surface in which the display 220 is accommodated, and the other surface to which the printed circuit board 240 is accommodated. A processor (e.g., the processor 120 in FIG. 1), a memory (e.g., the memory 130 in FIG. 1), and/or an interface (e.g., the interface 177 in FIG. 1) may be mounted on the printed circuit substrate 240.

According to an embodiment, the battery 250 may supply power to at least one element (e.g., the camera module 212) of the electronic device 200, and, for example, may include a non-rechargeable primary cell, a rechargeable secondary cell, or a fuel cell. For example, at least a part of the battery 250 may be disposed on substantially the same plane as the printed circuit board 240. The battery 250 may also be integrally disposed inside the electronic device 200, or may also be disposed so as to be detachable/attachable from/to the electronic device 200.

According to an embodiment, the rear case 260 may be disposed between the printed circuit board 240 and the antenna 270. For example, the rear case 260 may include one surface to which at least one of the printed circuit board 240 or the battery 250 is coupled, and the other surface to which the antenna 270 is coupled.

According to an embodiment, the antenna 270 may also be disposed between the rear plate 280 and the battery 250. For example, the antenna 270 may also include a near field communication (NFC) antenna, a wireless charging antenna, and/or a magnetic secure transmission (MST) antenna. For example, the antenna 270 may perform a short-range communication with an external device, or may wirelessly transmit or receive power utilized for charging. For example, the antenna 270 may include a coil for wireless charging. In an embodiment, an antenna structure may be formed by a part of the lateral bezel structure 231 and/or the bracket 232, or a combination thereof.

According to an embodiment, the electronic device 200 may include a camera module 212 disposed in a housing (e.g., the housing 210 in FIG. 2). According to an embodiment, the camera module 212 may be a rear camera module (e.g., the camera module 212 in FIG. 3) which is disposed on the bracket 232 and can obtain an image of a subject positioned at the rear side (e.g., the -Z-axis direction) of the electronic device 200. According to an embodiment, at least a part of the camera module 212 may be exposed to the outside of the electronic device 200 through an opening 282 formed in the rear plate 280.

Although the electronic device 200 illustrated in FIG. 2 to FIG. 4 has a bar-type or a plate-type exterior, the disclosure is not limited thereto. For example, the illustrated electronic device may be a rollable electronic device or a foldable electronic device. A "rollable electronic device" may mean an electronic device in which a display (e.g., the display 220 in FIG. 4) can be bent and deformed so that at least a portion thereof is wound or rolled, or accommodated inside a housing (e.g., the housing 210 in FIG. 2). According to needs of a user, the rollable electronic device may be configured such that a display is unfoldable or a larger area of a display is exposed to the outside, so as to expand and use a screen display area thereof.

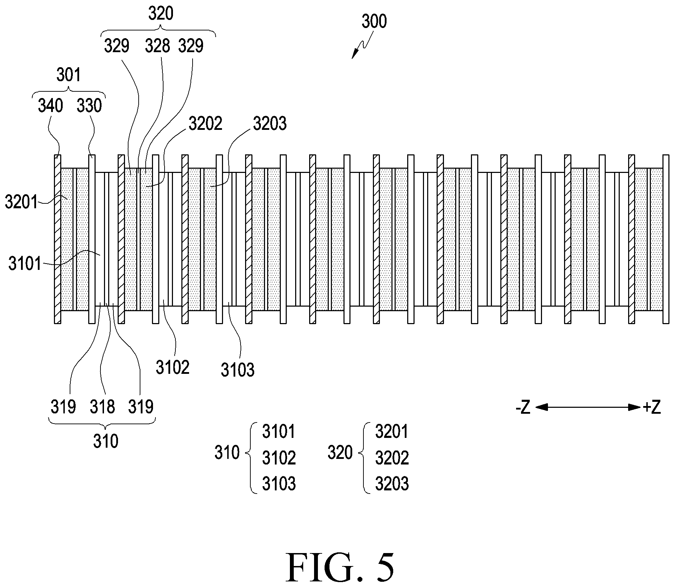

FIG. 5 is a schematic view of a battery according to an embodiment of the disclosure.

Referring to FIG. 5, a battery 300 may include a first electrode 310, a second electrode 320, and a separator 301. The configuration of the battery 300 in FIG. 5 may be partially or entirely the same as the configuration of the battery 189 in FIG. 1 or the battery 250 in FIG. 4.

According to an embodiment, a battery 300 may supply power to at least one element of an electronic device (e.g., the electronic device 200 in FIG. 2) (e.g., a mobile phone). The battery 300 may be a rechargeable secondary battery. According to an embodiment, the battery 300 may be disposed in the electronic device 200.

According to an embodiment, the first electrode 310 may include multiple first electrodes 3101, 3102, and 3103 spaced apart from each other. For example, the multiple first electrodes 3101, 3102, and 3103 may be stacked with respect to each other. According to an embodiment, the number of the first electrodes 310 may be changed based on a design of the battery 300. According to an embodiment, the first electrode 310 may be referred to as a positive electrode or a reduction electrode (i.e., cathode).

According to an embodiment, the first electrode 310 may include a positive-electrode substrate 318 and a positive-electrode mixture 319 disposed on the positive-electrode substrate 318. Each of the multiple first electrodes 3101, 3102, and 3103 may include a positive-electrode substrate 318 and a positive-electrode mixture 319. For example, one of the multiple first electrodes 3101, 3102, and 3103 may include one positive-electrode substrate 318 and two positive-electrode mixtures 319. According to an embodiment, the positive-electrode substrate 318 may include aluminum (Al). According to an embodiment, the positive-electrode mixture 319 may include a lithium (Li) oxide including a transition metal (e.g., at least one of cobalt (Co), manganese (Mn), or iron (Fe)). According to an embodiment, the positive-electrode mixture 319 may surround at least a part of the positive-electrode substrate 318. For example, the positive-electrode substrate 318 may be disposed between one pair of the positive-electrode mixtures 319. According to an embodiment, the positive-electrode substrate 318 may be referred to as a first substrate, and the positive-electrode mixture 319 may be referred to as a first mixture.

According to an embodiment, the second electrode 320 may include multiple second electrodes 3201, 3202, and 3203. For example, the multiple second electrodes 3201, 3202, and 3203 may be stacked with respect to each other. According to an embodiment, the number of the second electrodes 320 may be changed based on a design of the battery 300. According to an embodiment, the second electrode 320 may be referred to as a negative-electrode or an oxidation electrode (i.e., anode).

According to an embodiment, the second electrode 320 may include a negative-electrode substrate 328 and a negative-electrode mixture 329. Each of the multiple second electrodes 3201, 3202, and 3203 may include a negative-electrode substrate 328 and a negative-electrode mixture 329. For example, one of the multiple second electrodes 3201, 3202, and 3203 may include one negative-electrode substrate 328 and two negative-electrode mixtures 329. According to an embodiment, the negative-electrode substrate 328 may include nickel (Ni) and/or copper (Cu). According to an embodiment, the negative-electrode mixture 329 may include graphite and/or a lithium (Li) titanium (Ti) oxide. According to an embodiment, the negative-electrode mixture 329 may surround at least a part of the negative-electrode substrate 328. For example, the negative-electrode substrate 328 may be disposed between one pair of the negative-electrode mixtures 329. According to an embodiment, the negative-electrode substrate 328 may be referred to as a second substrate, and the negative-electrode mixture 329 may be referred to as a second mixture.

According to an embodiment, the separator 301 may be a non-conductive porous body which physically separates the first electrode 310 and the second electrode 320, and has a pore enabling a designated material (e.g., a lithium (Li) ion) to move therein. According to an embodiment, the separator 301 may be made of a synthetic resin (e.g., polyethylene or polypropylene).

According to an embodiment, the separator 301 (e.g., the separator assembly) may include multiple separators 330 and 340. For example, the separator 301 may include a first separator 330 and a second separator 340. The second separator 340 may be spaced apart from the first separator 330.

According to an embodiment, the battery 300 may have a stacked shape. For example, the first electrode 310, the second electrode 320, the first separator 330, and the second separator 340 may be formed to have a stacked shape. According to an embodiment, one (e.g., the second separator 340) of the separator 301, one (e.g., the first oxidation electrode 3201) of the multiple second electrodes 320, one (e.g., the first reduction electrode 3101) of the multiple first electrodes 310, and the other (e.g., the first separator 330) of the separator 301 may be sequentially stacked.

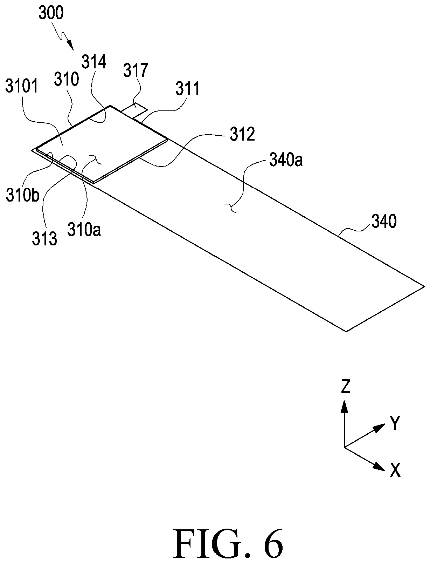

FIGS. 6, 7a, 7b, 8, 9, 10, 11, 12, 13, 14, 15 and 16 are views showing a process of manufacturing a battery according to an embodiment of the disclosure. The configuration of a battery 300 in FIGS. 6, 7a, 7b, 8, 9, 10, 11, 12, 13, 14, 15 and 16 may be partially or entirely the same as the configuration of the battery 300 in FIG. 5. For example, the configuration of a first electrode 310, a second electrode 320, a first separator 330, and a second separator 340 illustrated in at least one of FIGS. 6, 7a, 7b, 8, 9, 10, 11, 12, 13, 14, 15 and 16 may be the same as the configuration of the first electrode 310, the second electrode 320, the first separator 330, and the second separator 340 in FIG. 5.

According to an embodiment, the separator 301 may include multiple separators (e.g., the first separator 330 and the second separator 340). According to an embodiment, an electrode (e.g., the first electrode 310 or the second electrode 320) may be positioned between the first separator 330 and the second separator 340. The first separator 330 and the second separator 340 may prevent direct contact between the first electrode 310 and the second electrode 320. By preventing direct contact between the first electrode 310 and the second electrode 320, a short circuit of the battery 300 may be prevented.

According to an embodiment, the first separator 330 and the second separator 340 may be wound in a state of being arranged in different directions. For example, the first separator 330 may be wound after being disposed substantially perpendicular to the second separator 340. According to an embodiment, the second separator 340 may be disposed along a second direction (e.g., the +X direction), and may be wound around a first direction (e.g., the +Y direction). For example, the second separator 340 may be wound to surround the first direction (the +Y direction). The first separator 330 may be disposed along the first direction, and may be wound around the second direction. For example, the first separator 330 may be wound to surround the second direction (e.g., the +X direction). In various embodiments of the document, the state, in which the first separator 330 is disposed along the first direction (e.g., the +Y direction), may be referred to as a state in which the length in the first direction (e.g., the +Y direction) of the first separator 330 is longer than the length in the second direction (e.g., the +X direction). For example, the first separator 330 configured to be folded in the first direction (e.g., the +Y direction) or a third direction(e.g., the -Y direction) opposite to the first direction. For example, the second separator 340 configured to be folded in a second direction (e.g., the +X direction) perpendicular to the first direction, or a fourth direction (e.g., the -X direction) opposite to the second direction.

According to an embodiment, a first length of the first separator 330 and a second length of the second separator 340 may be different. For example, in case that the battery 300 includes a substantially rectangular parallelepiped shape, the length in first direction (e.g., the +Y direction) of an electrode (e.g., the first electrode 310 and the second electrode 320) may be different from the length in the second direction (e.g., the +X direction). According to an embodiment, the length in the first direction (e.g., the +Y direction) of the first electrode 310 and the second electrode 320 may be longer than the length in the second direction (e.g., the +X direction) of the first electrode 310 and the second electrode 320). The first length of the first separator 330 wound around the second direction (e.g., the +X direction) may be longer than the second length of the second separator 340 wound around the first direction (e.g., the +Y direction) .

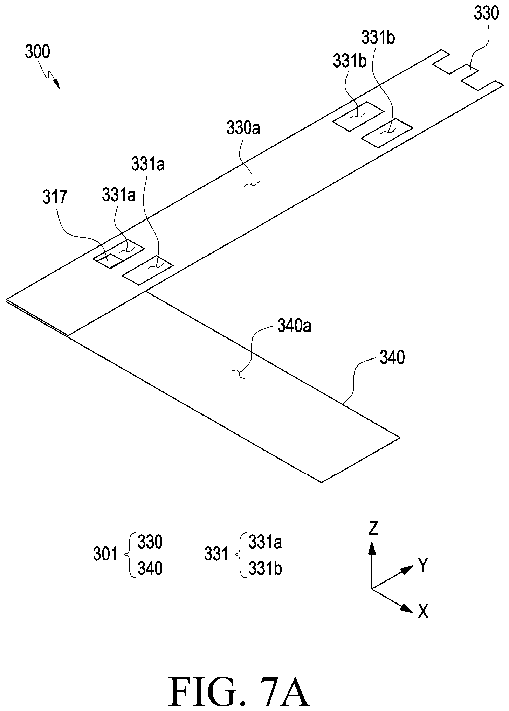

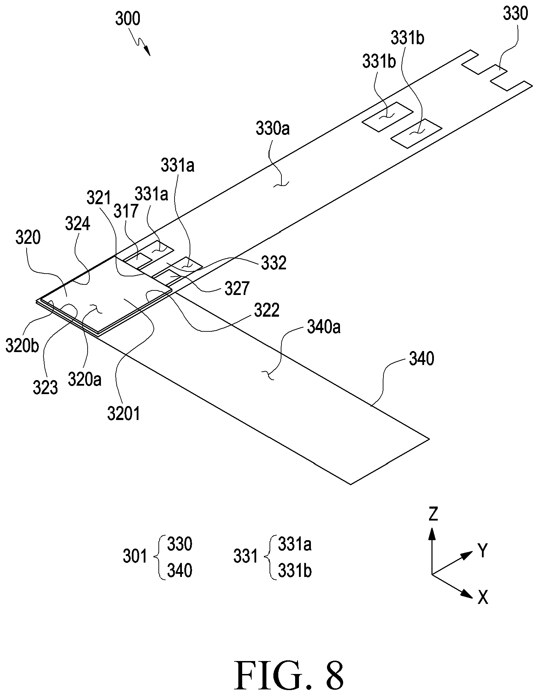

According to an embodiment (e.g., FIG. 6 to FIG. 8), the second separator 340, the first electrode 310, the first separator 330, and the second electrode 320 may be alternately stacked. For example, the first separator 330 may be positioned in a Z-shape or a zigzag pattern with respect to the second separator 340. For example, referring to FIG. 6, one electrode (e.g., the first electrode 310) may be disposed on a third surface 340a of the second separator 340 (e.g., in the Z-axis direction). A first rear surface 310b of the first electrode 310 may be disposed on the third surface 340a of the second separator 340.The first rear surface 310b may be opposite to a first upper surface 310a. Referring to FIG. 7a, the first separator 330 may be disposed on the first upper surface 310a of the first electrode 310. Referring to FIG. 8, the second electrode 320 may be disposed on a first surface 330a of the first separator 330. For example, a second rear surface 320b of the second electrode 320 may be disposed on the first surface 330a of the first separator 330. The second rear surface 320b may be opposite to the second upper surface 320a. The order in which the first electrode 310 and the second electrode 320 are arranged may be changed. For example, in this description, although a structure in which the first electrode 310 is first disposed on the second separator 340 and the first separator 330 and the second electrode 320 are arranged on the first electrode 310 is illustrated, it is understood this arrangement is a mere non-limiting example. For example, in an embodiment not shown, the second electrode 320 may be first disposed on the first separator 330, and the first separator 330 and the first electrode 310 may be arranged on the second electrode 320.

According to an embodiment, the first electrode 310 and the second electrode 320 may be arranged in the same direction. For example, the first electrode 310 may include a first substrate and at least one first tab 317 protruding from the first substrate in a first direction (e.g., the +Y direction). For example, the plurality of first electrodes 310 may include a plurality of first substrates and a plurality of first tabs 317 protrudes from the plurality of first substrates in a first direction (e.g., the +Y direction), respectively, wherein the plurality of first tabs are electrically connected together. The second electrode 320 may include a second substrate and at least one second tab 327 protruding from the second substrate in the first direction (e.g., the +Y direction). For example, the plurality of second electrodes 320 may include a plurality of second substrates and a plurality of second tabs 327 protrudes from the plurality of second substrates in a first direction (e.g., the +Y direction), respectively, wherein the plurality of second tabs 327 are electrically connected together. According to an embodiment, the first tab 317 may be referred to as a positive-electrode tab. The second tab 327 may be referred to as a negative-electrode tab.

According to an embodiment, one of the first separator 330 or the second separator 340 may accommodate the first tab 317 of the first electrode 310 and/or the second tab 327 of the second electrode 320. For example, the separators 330 and 340 may surround at least a part of the tabs 317 and 327. Referring to an embodiment (e.g., FIG. 7a), the first separator 330 may include multiple through-holes 331 for accommodating the first tab 317 of the first electrode 310 and/or the second tab 327 of the second electrode 320. The second separator 340 may not include a through-hole for accommodating the first tab 317 or the second tab 327. According to another embodiment not shown, the second separator 340 may include multiple through-holes for accommodating the first tab 317 of the first electrode 310 and/or the second tab 327 of the second electrode 320. The first separator 330 may not include a through-hole for accommodating the first tab 317 or the second tab 327.

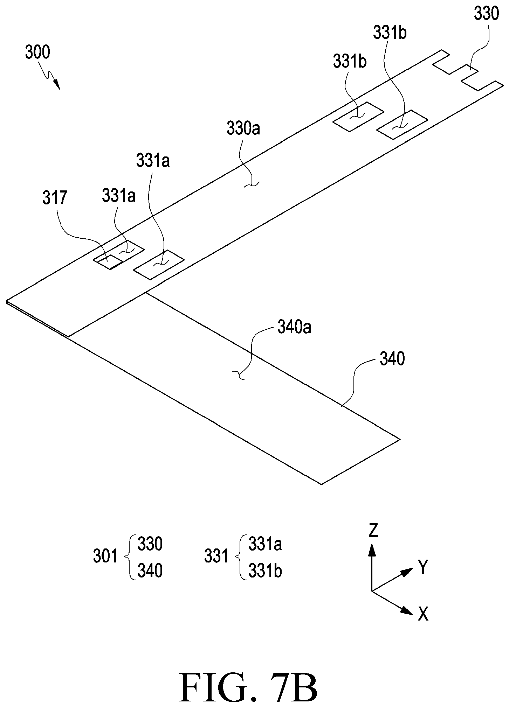

According to an embodiment, in order to accommodate multiple electrodes (e.g., the multiple first electrodes 310 and the multiple second electrodes 320), the multiple through-holes 331 may include at least one first through-hole 331a and at least one second through-hole 331b spaced apart in the first direction (e.g., the +Y direction) . A first bending part 332 of the first separator 330 may be positioned around the first through-hole 331a. For example, the at least one first through-hole 331a may accommodate a first reduction electrode (e.g., the first reduction electrode 3101 in FIG. 5) and a first oxidation electrode (e.g., the first oxidation electrode 3201 in FIG. 5). For example, the multiple first through-holes 331a may includes the first through-hole 331a accommodating a first reduction electrode (e.g., the first reduction electrode 3101 in FIG. 5) and the first through-hole 331a accommodating a first oxidation electrode (e.g., the first oxidation electrode 3201 in FIG. 5). For example, referring to Fig.7a, the first through-hole 331a accommodating a first reduction electrode (e.g., the first reduction electrode 3101 in FIG. 5) and the first through-hole 331a accommodating a first oxidation electrode (e.g., the first oxidation electrode 3201 in FIG. 5) may disposed side by side in the X-axis direction. For example, referring to Fig.7b, the positions of the first through-hole 331a accommodating a first reduction electrode (e.g., the first reduction electrode 3101 in FIG. 5) and the first through-hole 331a accommodating a first oxidation electrode (e.g., the first oxidation electrode 3201 in FIG. 5) in the Y-axis direction may be different from each other. The at least one second through-hole 331b may accommodate a second reduction electrode (e.g., the second reduction electrode 3102 in FIG. 5) and a second oxidation electrode (e.g., the second oxidation electrode 3202 in FIG. 5). For example, the multiple second through-hole 331b may includes the second through-hole 331b accommodating a second reduction electrode (e.g., the second reduction electrode 3102 in FIG. 5) and the second through-hole 331b accommodating a second oxidation electrode (e.g., the second oxidation electrode 3202 in FIG. 5). For example, referring to Fig.7a, the second through-hole 331b accommodating a second reduction electrode (e.g., the second reduction electrode 3102 in FIG. 5) and the second through-hole 331b accommodating a second oxidation electrode (e.g., the second oxidation electrode 3202 in FIG. 5) may disposed side by side in the X-axis direction. For example, referring to Fig.7b, the positions of the second through-hole 331b accommodating a second reduction electrode (e.g., the second reduction electrode 3102 in FIG. 5) and the second through-hole 331b accommodating a second oxidation electrode (e.g., the second oxidation electrode 3202 in FIG. 5) in the Y-axis direction may be different from each other.

According to an embodiment (e.g., FIG. 6), the first electrode 310 may have a pack shape. For example, one first electrode 310 may have a substantially rectangular parallelepiped shape. According to an embodiment, the first electrode 310 may include the first upper surface 310a, the first rear surface 310b, and side surfaces 311, 312, 313, and 314 surrounding at least a part between the first upper surface 310a and the first rear surface 310b. The side surfaces 311, 312, 313, and 314 may include first side surfaces 311 and 313 oriented in the first direction (e.g., the +Y direction) and second side surfaces 312 and 314 oriented in a second direction (e.g., the +X direction). The first side surfaces 311 and 313 may include a (1-1)th side surface 311 and a (1-2)th side surface 313 which are oriented in directions opposite to each other. The (1-1)th side surface 311 and/or the (1-2)th side surface 313 may be covered by the second separator 340. The second side surfaces 312 and 314 may include a (2-1)th side surface 312 and a (2-2)th side surface 314 which are oriented in directions opposite to each other. The (2-1)th side surface 312 and/or the (2-2)th side surface 314 may be covered by the first separator 330.

According to an embodiment (e.g., FIG. 8), the second electrode 320 may have a pack shape. For example, one second electrode 320 may have a substantially rectangular parallelepiped shape. According to an embodiment, the second electrode 320 may include the second upper surface 320a, the second rear surface 320b, and side surfaces 321 and 322 surrounding at least a part between the second upper surface 320a and the second rear surface 320b. The side surfaces 321 and 322 may include a third side surface 321 oriented in the first direction (e.g., the +Y direction) and a fourth side surface 322 oriented the second direction (e.g., the +X direction). The third side surfaces 321 and 323 may include a (3-1)th side surface 321 and a (3-2)th side surface 323 which are oriented in directions opposite to each other. The (3-1)th side surface 321 and/or the (3-2)th side surface 323 may be covered by the first separator 330. The fourth side surfaces 322 and 324 may include a (4-1)th side surface 322 and a (4-2)th side surface 324 which are oriented in directions opposite to each other. The (4-1)th side surface 322 and/or the (4-2)th side surface 324 may be covered by the second separator 330.

According to an embodiment, the separator 301 may cover a part of the side surfaces 311, 312, 313, and 314 of the first electrode 310 and/or a part of the side surfaces 321, 322, 323, and 324 of the second electrode 320. The first separator 330 may surround the first electrode 310 and the second electrode 320 in one direction (e.g., the first direction (e.g., the +Y direction) ), and the second separator 340 may surround the first electrode 310 and the second electrode 320 in a direction (e.g., the second direction (e.g., the +X direction)) different therefrom. According to an embodiment, the first separator 330 may cover at least a part of the first side surfaces 311 and 313 of the first electrode 310 and/or at least a part of the third side surfaces 321 and 323 of the second electrode 320. For example, the first separator 330 may cover the (1-1)th side surface 311 and the (3-2)th side surface 323. The second separator 340 may cover at least a part of the second side surfaces 312 and 314 of the first electrode 310 or at least a part of the fourth side surfaces 322 and 324 of the second electrode 320. For example, the second separator 340 may cover the (2-1)th side surface 321 and the (4-2)th side surface 324. The first separator 330 and the second separator 340 may cover the side surfaces of electrodes (e.g., the first electrode 310 and the second electrode 320) in different directions to prevent short circuit of the battery 300.

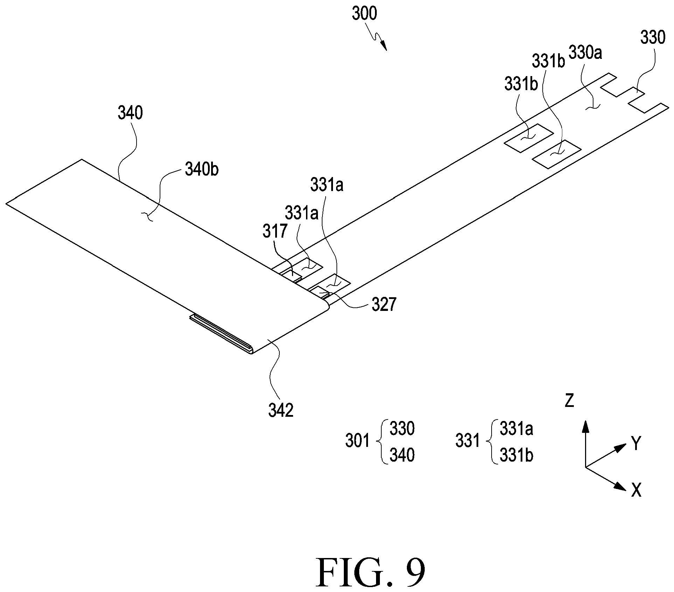

According to an embodiment (e.g., FIG. 9), a part of the second separator 340 may be folded. For example, the second separator 340 may include a second bending part 342 for covering a second side surface (e.g., the second side surface 312 in FIG. 6) of a first electrode (e.g., a first electrode 310 in FIG. 6) and a fourth side surface (e.g., the fourth side surface 322 in FIG. 8) of a second electrode (e.g., the second electrode 320 in FIG. 8). The second bending part 342 may protect the second side surface 312 of the first electrode 310 and the fourth side surface 322 of the second electrode 320.

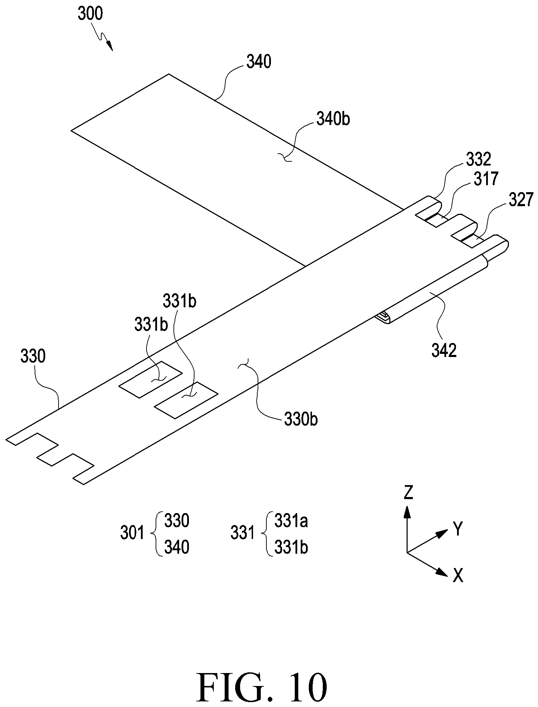

According to an embodiment (e.g., FIG. 10), a part of the first separator 330 may be folded. For example, a part of the first separator 330 may be folded while surrounding at least a part of the first electrode 310 disposed on the second separator 340. The first separator 330 may include the first bending part 332 for covering a first side surface (e.g., the (1-1)th side surface 311 in FIG. 6) of a first electrode (e.g., the first electrode 310 in FIG. 6) and a third side surface (e.g., the (3-1)th side surface 321 in FIG. 8) of a second electrode (e.g., the second electrode 320 in FIG. 8). The first bending part 332 may protect at least a part of the first side surfaces 311 and 313 of the first electrode 310 and at least a part of the third side surfaces 321 and 323 of the second electrode 320.

According to an embodiment, the battery 300 may include the multiple first electrodes 310 and the multiple second electrodes 320. For example, the battery 300 may include multiple first electrodes (e.g., the first reduction electrode 3101, the second reduction electrode 3102, and the third reduction electrode 3103 in FIG. 5), multiple oxidation electrodes (e.g., the first oxidation electrode 3201, the second oxidation electrode 3202, and the third oxidation electrode 3103 in FIG. 5), and one first separator 330 and one second separator 340, which are stacked with respect to each other.

Referring to FIG. 10, the first separator 330 may be folded relative to the second separator 340 while having one reduction electrode (not shown) (e.g., the second reduction electrode 3102 in FIG. 5) interposed therebetween. The second reduction electrode 3102 may be positioned between the first separator 330 and the second separator 340. For example, the upper surface of the first electrode 310 may face the first surface 330a of the first separator 330, and the rear surface of the first electrode 310 may face the fourth surface 340b of the second separator 340. The battery 300 may further include the second reduction electrode 3102 together with the first reduction electrode 3101 in FIG. 6.

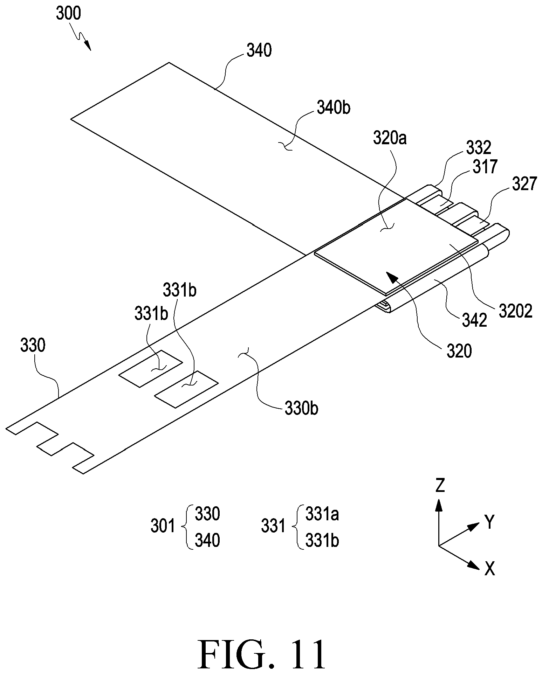

Referring to FIG. 11, the second electrode 320 may be disposed on the first separator 330. For example, the battery 300 may further include a second oxidation electrode 3202 disposed on the second surface 330b of the first separator 330 together with a first oxidation electrode (e.g., the first oxidation electrode 3201 in FIG. 7a) disposed on the first surface 330a of the first separator 330.

The battery 300 of the disclosure may be manufactured by repeating the stacking process of the first electrode 310, the second electrode 320, the first separator 330, and the second separator 340 as described in FIG. 6 to FIG. 11. Some repeated descriptions may be omitted. For example, the battery 300 may be manufactured by repeating the processes previously described.

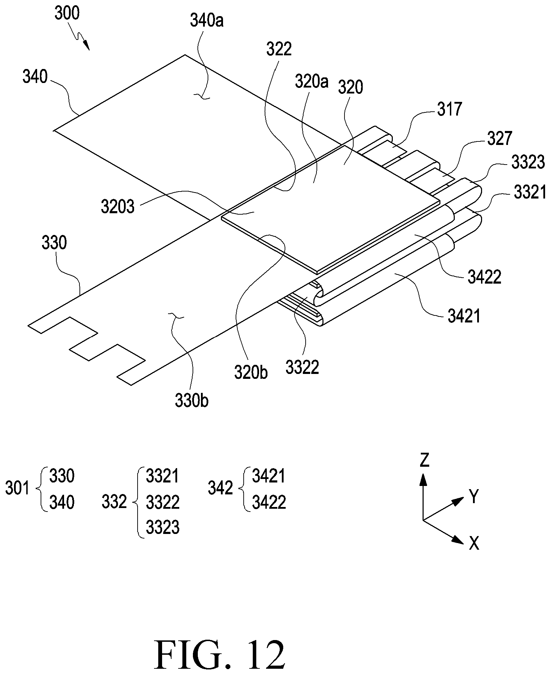

FIG. 12 to FIG. 15 are perspective views showing the battery 300 after a part of the manufacturing process of the battery 300 in FIG. 11 has progressed.

According to an embodiment, the first separator 330 may include the first bending part 332 for covering a first side surface (e.g., the (1-1)th side surface 311 and/or the (1-2)th side surface 313 in FIG. 6) of the first electrode 310, and/or a third side surface (e.g., the (3-1)th side surface 321 and/or the (3-2)th side surface 323 in FIG. 8)of the second electrode 320. According to an embodiment, the first bending part 332 may be selectively formed to correspond to the number of times in which the first separator 330 is folded. For example, the first bending part 332 may include multiple first bending parts 3321, 3322, 3323, and 3324 spaced apart from each other. According to an embodiment, in case that the first separator 330 is folded four times, the first bending part 332 may include a (1-1)th bending part 3321, a (1-2)th bending part 3322, a (1-3)th bending part 3323, and a (1-4) bending part (3324) which are spaced apart from each other.

According to an embodiment, the second separator 340 may include a second bending part 342 for covering a second side surface (e.g., the (2-1)th side surface 312 and/or the (2-2)th side surface 314 in FIG. 6) of the first electrode 310, and/or a fourth side surface(e.g., the (4-1)th side surface 322 and/or the (4-2)th side surface 324 in FIG. 8) of the second electrode 320. According to an embodiment, the second bending part 342 may be selectively formed to correspond to the number of times in which the second separator 340 is folded. For example, in case that the second separator 340 is folded four times, the second bending part 342 may include a (2-1)th bending part 3421, a (2-2)th bending part 3422, a (2-3)th bending part 3423, and a (2-4) bending part (not shown) which are spaced apart from each other.

According to an embodiment, the first bending part 332 and the second bending part 342 may be alternately positioned. For example, when the battery 300 is seen in the width direction (e.g., the X-axis direction or the Y-axis direction) thereof, the first bending part 332 and the second bending part 342 may be positioned one by one in order.

According to an embodiment, the battery 300 may be a stacked type battery. For example, the battery 300 may include the multiple first electrodes 310 and the multiple second electrodes 320.

According to an embodiment (e.g., FIG. 12), the battery 300 may include a second electrode 320 disposed on the second surface 330b of the first separator 330. For example, the battery 300 may include a first oxidation electrode (e.g., the first oxidation electrode 3201 in FIG. 8) and an oxidation electrode (e.g., the third oxidation electrode 3203) spaced apart therefrom. According to an embodiment, the number of electrodes (e.g., the first electrode 310 and the second electrode 320) included in the battery 300 may be selectively designed. For example, in an embodiment, the battery 300 may further include at least one oxidation electrode positioned between a second oxidation electrode (e.g., the second oxidation electrode 3202 in FIG. 11) and the third oxidation electrode 3203.

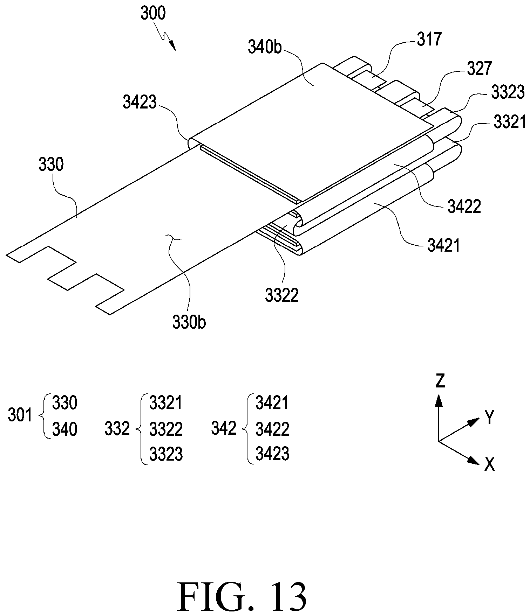

According to an embodiment (e.g., FIG. 13), the second separator 340 may cover at least a part of the second electrode 320 (e.g., the third oxidation electrode 3203 in FIG. 12). The third oxidation electrode 3203 may be positioned between the first separator 330 and the second separator 340. For example, the second upper surface 320a of the second electrode 320 may face the third surface 340a of the second separator 340, and the second rear surface 320b of the second electrode 320 (e.g., the third oxidation electrode 3203) may face the second surface 330b of the first separator 330.

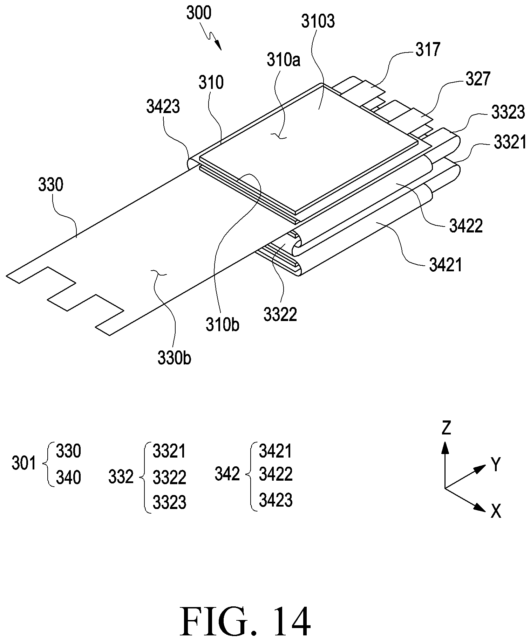

According to an embodiment (e.g., FIG. 14), the battery 300 may include the first electrode 310 disposed on a fourth surface 340b of the second separator 340. For example, the battery 300 may include a first reduction electrode (e.g., the first reduction electrode 3101 in FIG. 6) and a reduction electrode (e.g., the third reduction electrode 3103) spaced apart therefrom. According to an embodiment, the number of electrodes (e.g., the first electrode 310 and the second electrode 320) included in the battery 300 may be selectively designed. For example, in an embodiment, the battery 300 may further include at least one reduction electrode positioned between a second reduction electrode (e.g., the second reduction electrode 3102 in FIG. 5) and the third reduction electrode 3103.

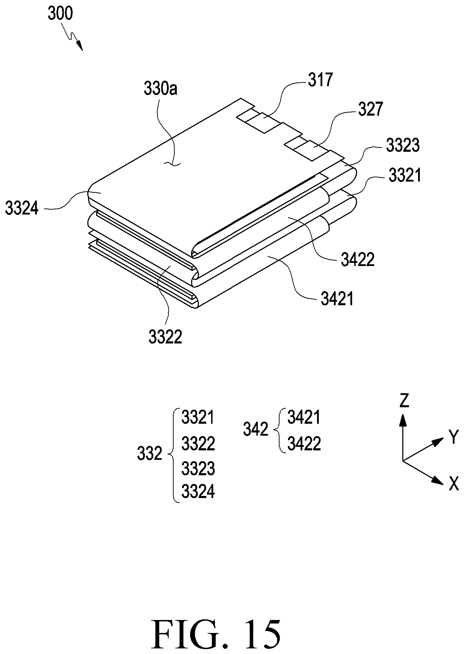

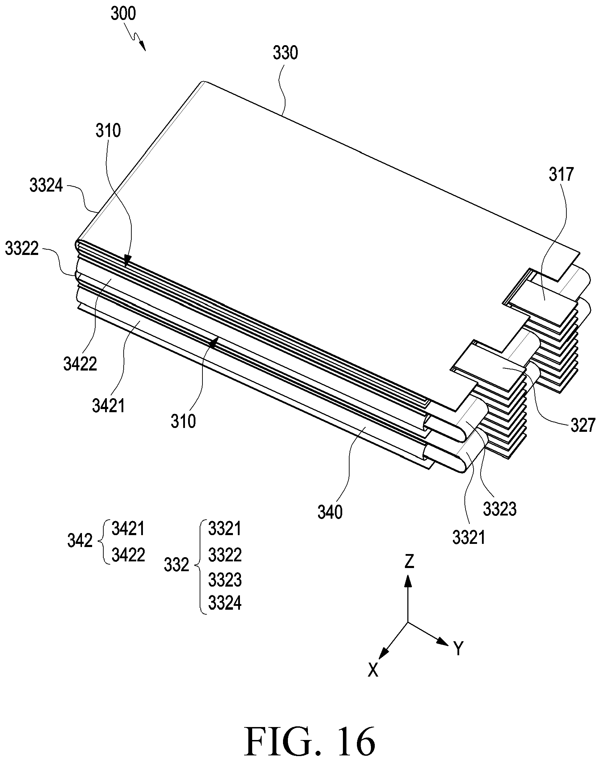

According to an embodiment (e.g., FIG. 15 and FIG. 16), the first separator 330 may cover at least a part of the first electrode 310 (e.g., the third reduction electrode 3103 in FIG. 14). The third reduction electrode 3103 may be positioned between the first separator 330 and the second separator 340. For example, the first upper surface 310a of the first electrode 310 (e.g., the third reduction electrode 3103) may face the first surface 330a of the first separator 330, and the first rear surface 310b of the third reduction electrode 3103 may face the fourth surface 340b of the second separator 340.

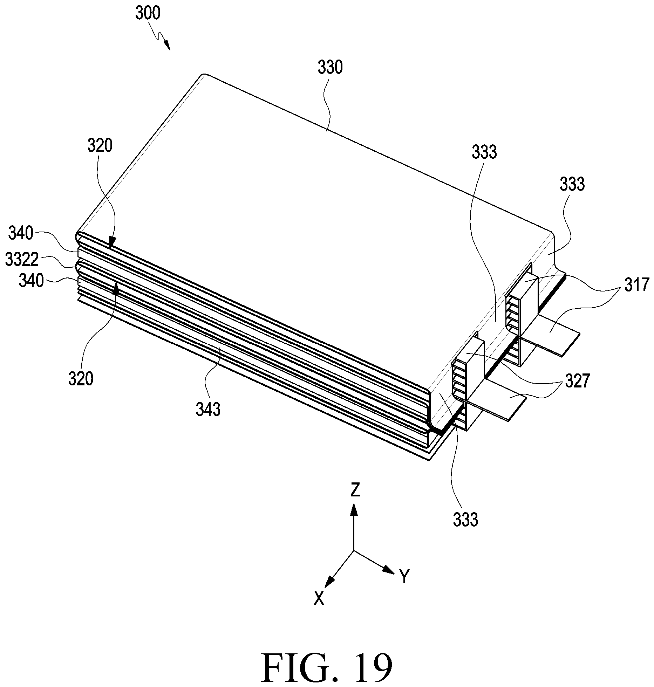

According to an embodiment, referring to Fig.19, the multiple first electrodes 310 may be electrically connected (e.g., tab welding). For example, the multiple first tabs 317 may be welded or bonded as one tab. The multiple second electrodes 320 may be electrically connected. For example, the multiple second tabs 327 may be welded or bonded as one tab. According to an embodiment, the multiple first tabs 317 may be connected to each other by using ultrasonic waves or lasers. The multiple second tabs 327 may be connected to each other by using ultrasonic waves or lasers. According to an embodiment, the first tabs 317 may be electrically separated from the second tabs 327.

According to an embodiment, a part of first side surfaces (e.g., the (1-1)th side surface 311 and/or the (1-2)th side surface 313 in FIG. 6) of the multiple first electrodes 310 may be surrounded by the first separator 330. A portion of the first side surfaces (e.g., the (1-1)th side surface 311 and/or the (1-2)th side surface 313 in FIG. 6), which is not surrounded by the first separator 330, may be covered by a protective tape not shown. A part of third side surfaces (e.g., the (3-1)th side surface 321 and/or the (3-2)th side surface 323 in FIG. 8) of the multiple second electrodes 320 may be surrounded by the second separator 340. A portion of the third side surfaces (e.g., the (3-1)th side surface 321 and/or the (3-2)th side surface 323 in FIG. 8), which is not surrounded by the first separator 330, may be covered by a protective tape not shown.

According to an embodiment, a part of second side surfaces (e.g., the (2-1)th side surface 312 and/or the (2-2)th side surface 314 in FIG. 6) of the multiple first electrodes 310 may be surrounded by the second separator 340. A portion of the second side surfaces (e.g., the (2-1)th side surface 312 and/or the (2-2)th side surface 314 in FIG. 6), which is not surrounded by the second separator 340, may be covered by a protective tape not shown. A part of fourth side surfaces (e.g., the (4-1)th side surface 322 and/or the (4-2)th side surface 324 in FIG. 8) of the multiple second electrodes 320 may be surrounded by the second separator 340. A portion of the fourth side surfaces (e.g., the (4-1)th side surface 322 and/or the (4-2)th side surface 324 in FIG. 8), which is not surrounded by the second separator 340, may be covered by a protective tape not shown.

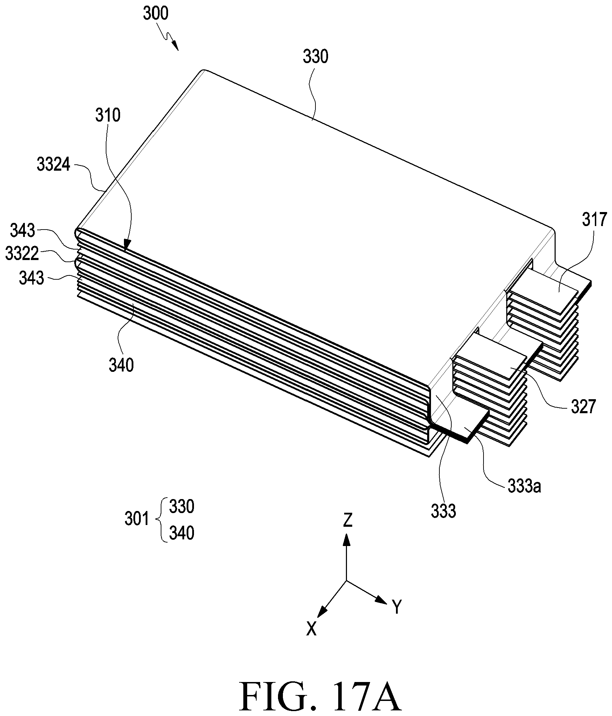

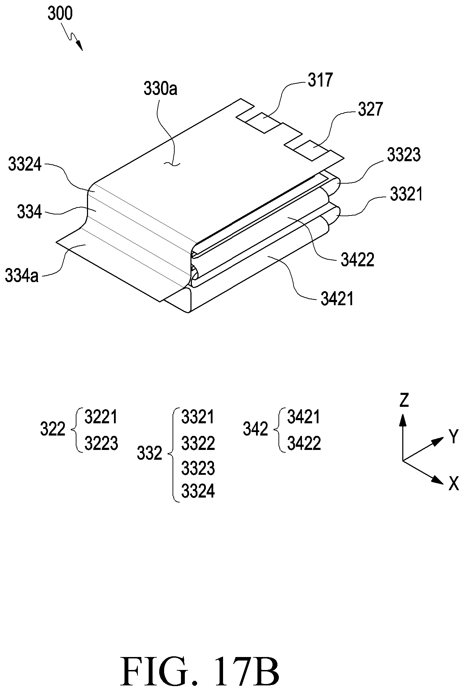

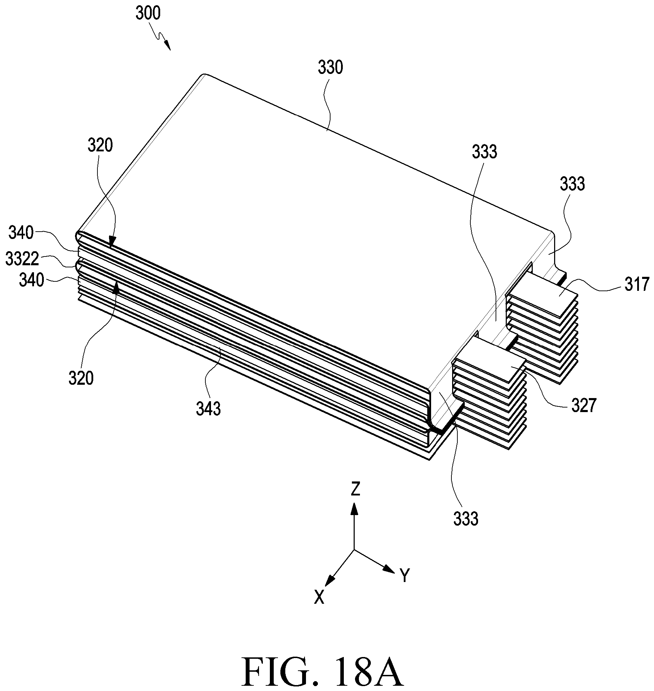

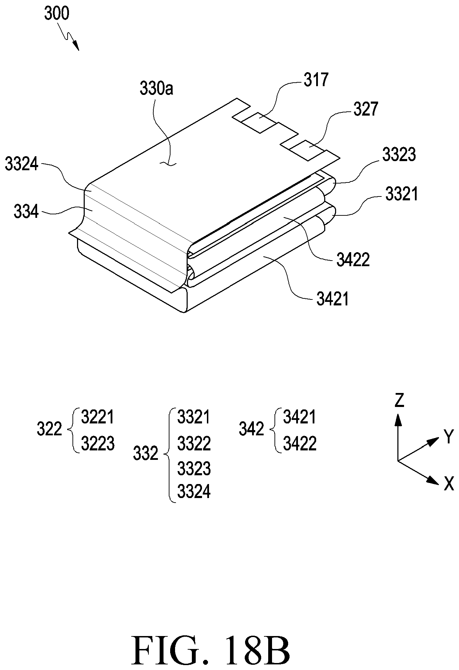

FIGS. 17a and 17b are a perspective view showing the front surface and the side surface of a battery in which first electrodes, second electrodes, and a separator are stacked according to an embodiment of the disclosure. FIGS. 18a and 18b are a perspective view of a battery according to an embodiment of the disclosure. FIG. 19 is a perspective view of a battery according to an embodiment of the disclosure.

Referring to FIG. 17a, 17b, 18a, 18b and 19, a battery 300 may include a first electrode 310, a second electrode (not shown), a first separator 330, and a second separator 340. The configuration of the battery 300 in FIG. 17a, 17b, 18a, 18b and 19 may be partially or entirely the same as the configuration of the battery 300 in FIG. 5. The battery 300 in FIG. 17a, 17b, 18a, 18b and 19 may be manufactured using the process described in FIG. 6 to FIG. 16.

According to an embodiment, at least a part of the bending parts 332 and 342 of the separator 301 may be fused. The first separator 330 may include a first fusion part 333 positioned on a side surface of the first electrode 310 and a side surface of the second electrode 320. For example, the separator may include a plurality of planes (e.g., the bending parts 332 and 342) by folding the first separator and the second separator and at least one side portions of the plurality of planes are bonded. The first fusion part 333 may be positioned in the first direction (the Y-axis direction) of the first electrode 310 and/or the second electrode 320. According to an embodiment, the first bending part 332 of the first separator 330 may be fused to at least a part of a side surface (e.g., the first side surface (e.g., the (1-1)th side surface 311 and/or the (1-2)th side surface 313 in FIG. 6) in FIG. 6) of a first electrode (e.g., the first electrode 310 in FIG. 6), and at least a part of a third side surface (e.g., the third side surface (e.g., the (3-1)th side surface 321 and/or the (3-2)th side surface 323 in FIG. 8) in FIG. 8) of a second electrode (e.g., the second electrode 320 in FIG. 8). According to an embodiment, at least a part (e.g., the first bending part 332) of the first separator 330 may further protrude than the first electrode 310 and the second electrode 320 in the first direction (the Y-axis direction) in order to position the through-hole 331 to correspond to the first tab 317 of the first electrode 310 and/or the second tab 327 of the second electrode 320. The first bending part 332 may be formed as the first fusion part 333, and thus the first electrode 310 and the second electrode 320 may be protected by the first separator 330. According to an embodiment, the first fusion part 333 may be positioned on a first side surface (e.g., the (1-1)th side surface 311 and/or the (1-2)th side surface 313 in FIG. 6) of the first electrode 310, and/or a third side surface (e.g., the (3-1)th side surface 321 and/or the (3-2)th side surface 323 in FIG. 8) of the second electrode 320. For example, referring to 17a, 18a, the first fusion part 333 may be positioned on a first side surface (e.g., the (1-1)th side surface 311 in FIG. 6) of the first electrode 310, and/or a third side surface (e.g., the (3-1)th side surface 321 in FIG. 8) of the second electrode 320. For example, referring to 17b, 18b, the first fusion part 334 may be positioned on a first side surface (e.g., the (1-2)th side surface 313 in FIG. 6) of the first electrode 310, and/or a third side surface (e.g., the (3-2)th side surface 323 in FIG. 8) of the second electrode 320.The first fusion part 333 may prevent contact between the first electrode 310 and the second electrode 320.

The first fusion part 333 may be referred to as a part of the first separator 330 fused to the first electrode 310 and/or the second electrode 320.

According to an embodiment, at least a part of the second separator 340 may be fused to a side surface of the first electrode 310 and a side surface of the second electrode 320. The second separator 340 may include a second fusion part 343 positioned on a side surface of the first electrode 310 and a side surface of the second electrode 320. According to an embodiment, the second fusion part 343 may be positioned in the second direction (e.g., the +X direction) of the first electrode 310 and/or the second electrode 320. For example, the second fusion part 343 may be positioned on a second side surface(e.g., the (2-1)th side surface 312 and/or the (2-2)th side surface 314 in FIG. 6) of the first electrode 310, and/or a fourth side surface(e.g., the (4-1)th side surface 322 and/or the (4-2)th side surface 324 in FIG. 8) of the second electrode 320.

According to an embodiment, the second bending part 342 of the second separator 340 may be fused to at least a part of a side surface (e.g., a second side surface (e.g., the (2-1)th side surface 312 and/or the (2-2)th side surface 314 in FIG. 6) in FIG. 6) of a first electrode (e.g., the first electrode 310 in FIG. 6), and at least a part of a fourth side surface (e.g., a fourth side surface (e.g., the (4-1)th side surface 322 and/or the (4-2)th side surface 324) in FIG. 8) in FIG. 8) of a second electrode (e.g., the second electrode 320 in FIG. 8). The fused second separator 340 may prevent contact between the first electrode 310 and the second electrode 320. The second fusion part 343 may be referred to as a part of the second separator 340 fused to the first electrode 310 and/or the second electrode 320.

The battery 300 in FIG. 18a may be formed by removing a part (e.g., the protruding area 333a) of the first fusion part 333 in FIG. 17a. The battery 300 in FIG. 18b may be formed by removing a part (e.g., the protruding area 334a) of the first fusion part 334 in FIG. 17b.

A lithium-ion battery used as a secondary battery may include an electrode assembly including a reduction electrode (e.g., a positive electrode), an oxidation electrode (e.g., a negative electrode), and a separator. The separator may prevent contact between the reduction electrode and the oxidation electrode so as to prevent a short circuit of the battery.

However, due to an external impact (e.g., falling of an electronic device), the battery and the electrodes positioned in the battery may move. Due to the movement of the electrodes, the reduction electrode, the oxidation electrode, and/or the separator may move, and thus a short circuit of the battery may occur. In a structure in which a reduction electrode, an oxidation electrode, and a separator are stacked, a short circuit due to the movement in the thickness direction (e.g., the Z-axis direction in FIG. 6) of the battery may be prevented, but a short circuit due to the movement in the width direction (e.g., the X-axis direction or the Y-axis direction in FIG. 6) of the battery may occur. In order to prevent a short circuit due to the movement in the width direction of the battery, an additional tape may be utilized.

According to an embodiment of the disclosure, a battery capable of reducing the short circuit of the battery may be provided using separators wound with reference to directions perpendicular to each other.

According to an embodiment of the disclosure, a battery capable of reducing a short circuit due to the movement in the width direction (e.g., the X-axis direction or the Y-axis direction in FIG. 6) of the battery may be provided.

The problem to be solved in the disclosure is not limited to the mentioned problem, and may be variously expanded within a scope not departing from the idea and the range of the disclosure.

In addition, various effects directly or indirectly identified through the document may be provided.

According to an embodiment of the disclosure, an electronic device (e.g., the electronic device 200 in FIG. 2) may include a processor (e.g., the processor 120 in FIG. 1) and a battery (e.g., the battery 250 in FIG. 4 and/or the battery 300 in FIG. 5 to FIG. 18b) configured to supply power to the processor. The battery may include multiple first electrodes (e.g., the first electrode 310 in FIG. 6) including first tabs (e.g., the first tab 317 in FIG. 6) configured to protrude toward a first direction (e.g., the Y-axis direction in FIG. 6), multiple second electrodes (e.g., the second electrode 320 in FIG. 8) including second tabs (e.g., the second tab 327 in FIG. 8) configured to protrude toward the first direction, and a separator (e.g., the separator 301 in FIG. 7a) configured to prevent contact between the multiple first electrodes and the multiple second electrodes. The separator may include a first separator (e.g., the first separator 330 in FIG. 10) configured to be folded in a second direction (e.g., the X-axis direction in FIG. 10) perpendicular to the first direction, or a fourth direction opposite to the second direction, the first separator including multiple through-holes configured to accommodate the first tabs and the second tabs, and a second separator (e.g., the second separator 340 in FIG. 9) configured to be folded in the first direction, or a third direction opposite to the first direction, the second separator being alternately stacked with the first separator.

According to an embodiment, each of the multiple first electrodes may include a first side surface (e.g., the (1-1)th side surface 311 and/or the (1-2)th side surface 313 in FIG. 6) oriented in the first direction and a second side surface (e.g., the (2-1)th side surface 312 and/or the (2-2)th side surface 314 in FIG. 6) oriented in the second direction. Each of the multiple second electrodes may include a third side surface (e.g., the (3-1)th side surface 321 and/or the (3-2)th side surface 323 in FIG. 8) oriented in the first direction and a fourth side surface (e.g., the (4-1)th side surface 322 and/or the (4-2)th side surface 324 in FIG. 8) oriented in the second direction. The first separator may be configured to cover at least a part of the first side surface or at least a part of the third side surface. The second separator may be configured to cover at least a part of the second side surface or at least a part of the fourth side surface. The first separator 330 may be configured to cover the side surfaces 311 and 321 in the first direction and the second separator 340 may be configured to cover the side surfaces 312 and 322 in the second direction, so as to reduce a short circuit of the battery 300. For example, in case that the battery 300 moves in the width direction (e.g., the first direction or the second direction) thereof due to an external impact, the first separator 330 or the second separator 340 may prevent direct contact between the first electrodes 310 and the second electrodes 320.

According to an embodiment, each of the multiple second electrodes may be positioned between the first separator and the second separator. Each of the multiple first electrodes may be positioned between the first separator and the second separator. For example, the first separator or the second separator may be positioned between one first electrode of the multiple first electrodes and one second electrode of the multiple electrode second electrodes. Each of the multiple first electrodes and each of the multiple second electrodes may be positioned between the first separator and the second separator so as to reduce a short circuit of the battery.

According to an embodiment, each of the multiple first electrodes may include a first upper surface (e.g., the first upper surface 310a in FIG. 6) and a first rear surface (e.g., the first rear surface 310b in FIG. 6). Each of the multiple second electrodes may include a second upper surface (e.g., the second upper surface 320a in FIG. 8) and a second rear surface (e.g., the second rear surface 320a in FIG. 8). The first separator may include a first surface (e.g., the first surface 330a in FIG. 8) and a second surface (e.g., the second surface 330b in FIG. 10) opposite to the first surface. The second separator may include a third surface (e.g., the third surface 340a in FIG. 7a) and a fourth surface (e.g., the fourth surface 340b in FIG. 9) opposite to the third surface. The first surface of the first separator may face the first rear surfaces of the multiple first electrodes and the second upper surfaces of the multiple second electrodes. The third surface of the second separator may face the second rear surfaces of the multiple second electrodes and the first upper surfaces of the multiple first electrodes.

The through-holes may include a first through-hole configured to accommodate the first tab of one first electrode of the multiple first electrodes, and a second through-hole spaced apart from the first through-hole and configured to accommodate the first tab of another one first electrode of the multiple first electrodes.

According to an embodiment, the first separator may include a first fusion part (e.g., the first fusion part 333 in FIG. 17a) positioned in the first direction with respect to the first electrodes and the second electrodes. The second separator may include a second fusion part (e.g., the second fusion part 343 in FIG. 17a) positioned in the second direction with respect to the first electrodes and the second electrodes.

According to an embodiment, the through-holes may include a first through-hole (e.g., the first through-hole 331a in FIG. 7a) configured to accommodate the first tab of one first electrode of the multiple first electrodes, and a second through-hole (e.g., the second through-hole 331b in FIG. 7a) spaced apart from the first through-hole and configured to accommodate the first tab of another one first electrode of the multiple first electrodes.

According to an embodiment, the first separator may have a first length different from a second length of the second separator.

According to an embodiment, each of the multiple first electrodes may include a positive-electrode substrate (e.g., the positive-electrode substrate 318 in FIG. 5) and a positive-electrode mixture (e.g., the positive-electrode mixture 319 in FIG. 5) configured to surround at least a part of the positive-electrode substrate.

According to an embodiment, the positive-electrode substrate may include aluminum, and the positive-electrode mixture may include a lithium oxide.

According to an embodiment, each of the multiple second electrodes may include a negative-electrode substrate (e.g., the negative-electrode substrate 328 in FIG. 5) and a negative-electrode mixture (e.g., the negative-electrode mixture 329 in FIG. 5) configured to surround at least a part of the negative-electrode substrate.

According to an embodiment, the negative-electrode substrate may include at least one of nickel or copper, and the negative-electrode mixture may include at least one of graphite or a lithium titanium oxide.

According to an embodiment, the second separator, one first electrode of the multiple first electrodes, the first separator, and one second electrode of the multiple second electrodes may be sequentially stacked.

According to an embodiment, the first separator may include a first bending part (e.g., the first bending part 332 in FIG. 10) configured to protect a part of the first side surface (e.g., the first side surface 311 in FIG. 6) of each of the multiple first electrodes and a part of the third side surface (e.g., the third side surface 321 in FIG. 8) of each of the multiple second electrodes. The second separator may include a second bending part (e.g., the second bending part 342 in FIG. 9) configured to protect a part of the second side surface (e.g., the second side surface 312 in FIG. 6) of each of the multiple first electrodes and a part of the fourth side surface (e.g., the fourth side surface 322 in FIG. 8) of each of the multiple second electrodes. The first bending part and the second bending part are positioned alternately.

According to an embodiment, the separator may include a non-conductive porous body including a pore.

According to an embodiment of the disclosure, the battery may include multiple first electrodes (e.g., the first electrode 310 in FIG. 6) including first tabs (e.g., the first tab 317 in FIG. 6) configured to protrude toward a first direction (e.g., the Y-axis direction in FIG. 6), multiple second electrodes (e.g., the second electrode 320 in FIG. 8) including second tabs (e.g., the second tab 327 in FIG. 8) configured to protrude toward the first direction, and a separator (e.g., the separator 301 in FIG. 7a) configured to prevent contact between the multiple first electrodes and the multiple second electrodes. The separator may include a first separator (e.g., the first separator 330 in FIG. 10) configured to be folded in a second direction (e.g., the X-axis direction in FIG. 10) perpendicular to the first direction or a fourth direction opposite to the second direction, the first separator including multiple through-holes configured to accommodate the first tabs and the second tabs, and a second separator (e.g., the second separator 340 in FIG. 9) configured to be folded in the first direction, or a third direction opposite to the first direction, the second separator being alternately stacked with the first separator.

According to an embodiment, each of the multiple first electrodes may include a first side surface (e.g., the first side surface 311 in FIG. 6) oriented in the first direction and a second side surface (e.g., the second side surface 312 in FIG. 6) oriented in the second direction. Each of the multiple second electrodes may include a third side surface (e.g., the third side surface 321 in FIG. 8) oriented in the first direction and a fourth side surface (e.g., the fourth side surface 322 in FIG. 6) oriented in the second direction. The first separator may be configured to cover at least a part of the first side surface or at least a part of the third side surface. The second separator may be configured to cover at least a part of the second side surface or at least a part of the fourth side surface. The first separator 330 may be configured to cover the side surfaces 311 and 321 in the first direction and the second separator 340 may be configured to cover the side surfaces 312 and 322 in the second direction, so as to reduce a short circuit of the battery 300. For example, in case that the battery 300 moves in the width direction (e.g., the first direction or the second direction) thereof due to an external impact, the first separator 330 or the second separator 340 may prevent direct contact between the first electrodes 310 and the second electrodes 320.

According to an embodiment of the disclosure, an electronic device (e.g., the electronic device 200 in FIG. 2) may include a processor (e.g., the processor 120 in FIG. 1) and a battery (e.g., the battery 250 in FIG. 4 and/or the battery 300 in FIG. 5 to FIG. 18b) configured to supply power to the processor. The battery may include a plurality of first electrodes (e.g., the first electrode 310 in FIG. 6) including a plurality of first substrates and a plurality of first tabs (e.g., the first tab 317 in FIG. 6) protruding from the plurality of first substrates in a first direction, respectively, wherein the plurality of first tabs are electrically connected together, a plurality of second electrodes (e.g., the second electrode 320 in FIG. 8) including a plurality of second substrates and a plurality of second tabs (e.g., the second tab 327 in FIG. 8) protruding from the plurality of second substrates in the first direction, respectively, wherein the plurality of second tabs are electrically connected together; and a separator assembly (e.g., the separator 301 in FIG. 7a) restricting contact between the plurality of first electrodes and the plurality of second electrodes. The separator assembly may include a first separator (e.g., the first separator 330 in FIG. 10) folded in the first direction or a third direction opposite to the first direction, the first separator including a plurality of through-holes through which the plurality of first tabs and the plurality of second tabs are disposed respectively, and a second separator (e.g., the second separator 340 in FIG. 9) folded in a second direction perpendicular to the first direction, or a fourth direction opposite to the second direction, the second separator alternately stacked with the first separator.

According to an embodiment, the plurality of first electrodes may include first side surfaces oriented in the first direction, and second side surfaces oriented in the second direction, respectively, wherein the plurality of second electrodes may include third side surfaces oriented in the first direction, and fourth side surfaces oriented in the second direction, respectively. The first separator may cover at least a part of each of the first side surfaces or at least a part of each of the third side surfaces. The second separator may cover at least a part of each of the second side surfaces or at least a part of each of the fourth side surfaces.

According to an embodiment, the separator assembly may include a plurality of planes by folding the first separator and the second separator and at least one side portions of the plurality of planes are bonded.

According to an embodiment, each of the plurality of second electrodes is positioned between the first separator and the second separator, and each of the plurality of first electrodes is positioned between the first separator and the second separator.

According to an embodiment, each of the plurality of first electrodes may include a first upper surface and a first rear surface opposite to the first upper surface, each of the plurality of second electrodes may include a second upper surface and a second rear surface opposite to the second upper surface, the first separator may include a first surface and a second surface opposite to the first surface, the second separator may include a third surface and a fourth surface opposite to the third surface, the first surface of the first separator may be disposed to face the first rear surface of the plurality of first electrodes, and the second upper surface of the plurality of second electrodes, and the third surface of the second separator may be disposed to face the second rear surface of the plurality of second electrodes and the first upper surface of the plurality of first electrodes.

According to an embodiment, the plurality of through-holes may include first through-holes configured to accommodate a first tab of one first electrode of the plurality of first electrodes, and second through-holes spaced apart from the first through-holes and configured to accommodate a first tab of another electrode of the plurality of first electrodes.

According to an embodiment, the first separator may include a first fusion part positioned in the first direction with respect to the plurality of first electrodes and the plurality of second electrodes, and the second separator may include a second fusion part positioned in the second direction with respect to the plurality of first electrodes and the plurality of second electrodes.

According to an embodiment, the first separator has a first length different from a second length of the second separator.

According to an embodiment, each of the plurality of first electrodes may include a positive-electrode substrate and a positive-electrode mixture surrounding at least a part of the positive-electrode substrate.

According to an embodiment, the positive-electrode substrate may include aluminum, and the positive-electrode mixture may include a lithium oxide.

According to an embodiment, each of the plurality of second electrodes may include a negative-electrode substrate and a negative-electrode mixture surrounding at least a part of the negative-electrode substrate.

According to an embodiment, the negative-electrode substrate may include at least one of nickel or copper, and the negative-electrode mixture may include at least one of graphite or a lithium titanium oxide.

According to an embodiment, the second separator, one first electrode of the plurality of first electrodes, the first separator, and one second electrode of the plurality of second electrodes are sequentially stacked.

According to an embodiment, the first separator comprises a first bending part protecting a part of the first side surfaces of each of the plurality of first electrodes and a part of the third side surfaces of each of the plurality of second electrodes, the second separator comprises a second bending part protecting a part of the second side surfaces of each of the plurality of first electrodes and a part of the fourth side surfaces of each of the plurality of second electrodes, and the first bending part and the second bending part are alternately disposed.

According to an embodiment, the separator comprises a non-conductive porous body comprising a pore.

According to an embodiment of the disclosure, a battery may include a plurality of first electrodes including a plurality of first substrates and a plurality of first tabs protruding from the plurality of first substrates in a first direction, respectively, wherein the plurality of first tabs are electrically connected together, a plurality of second electrodes including a plurality of second substrates and a plurality of second tabs protruding from the plurality of second substrates in the first direction, respectively, wherein the plurality of second tabs are electrically connected together, and a separator assembly restricting contact between the plurality of first electrodes and the plurality of second electrodes. The separator assembly may include a first separator folded in the first direction or a third direction opposite to the first direction, the first separator may include a plurality of through-holes through which the plurality of first tabs and the plurality of second tabs are disposed respectively, and a second separator folded in a second direction perpendicular to the first direction, or a fourth direction opposite to the second direction, the second separator alternately stacked with the first separator.

According to an embodiment, each of the plurality of first electrodes may include a first side surface oriented in the first direction and a second side surface oriented in the second direction, each of the plurality of second electrodes may include a third side surface oriented in the first direction and a fourth side surface oriented in the second direction, the first separator covers at least a part of the first side surface or at least a part of the third side surface, and wherein the second separator covers at least a part of the second side surface or at least a part of the fourth side surface.

According to an embodiment, the first separator is fixed to at least one of at least a part of the first side surface or at least a part of the third side surface, and the second separator is fixed to at least one of at least a part of the second side surface or at least a part of the fourth side surface.

According to an embodiment, the plurality of through-holes may include first through-holes configured to accommodate a first tab of one first electrode of the plurality of first electrodes, and second through-holes spaced apart from the first through-holes and configured to accommodate a first tab of another electrode of the plurality of first electrodes.

According to an embodiment, the first separator has a first length different from a second length of the second separator.

According to an embodiment of the disclosure, a method for manufacturing a battery may include disposing a first separator along a first direction, disposing a first electrode including a first substrate and a first tab protruding from the first substrate in the first direction on the first separator, disposing a second separator along a second direction substantially perpendicular to the first direction, and disposing it on the first electrode, disposing a second electrode including a second substrate and a second tab protruding from the second substrate in the first direction on the second separator, folding a first separator in the first direction or a third direction opposite to the first direction, folding a second separator in the second direction or a fourth direction opposite to the second direction, and fusing at least a part of at least one of the first separator and the second separator.

A battery and an electronic device including the battery of the disclosure described above may not be limited by the above-described embodiments and drawings, and it will be obvious to a person skilled in the technical field to which the disclosure belongs that various substitutions, modifications, and changes are possible within the technical scope of the disclosure.

## Claims

1. An electronic device (101, 200) comprising:
a processor (120); and
a battery (189, 300) configured to supply power to the processor,
wherein the battery comprises:
a plurality of first electrodes (310) including a plurality of first substrates and a plurality of first tabs (317) protruding from the plurality of first substrates in a first direction, respectively, wherein the plurality of first tabs are electrically connected together;
a plurality of second electrodes (320) including a plurality of second substrates and a plurality of second tabs (327) protruding from the plurality of second substrates in the first direction, respectively, wherein the plurality of second tabs are electrically connected together; and
a separator assembly (301) restricting contact between the plurality of first electrodes and the plurality of second electrodes,
wherein the separator assembly comprises:
a first separator (330) folded in the first direction or a third direction opposite to the first direction, the first separator including a plurality of through-holes (331) through which the plurality of first tabs and the plurality of second tabs are disposed respectively; and
a second separator (340) folded in a second direction perpendicular to the first direction, or a fourth direction opposite to the second direction, the second separator alternately stacked with the first separator.

2. The electronic device of claim 1, wherein the plurality of first electrodes includes first side surfaces (311) oriented in the first direction and second side surfaces (312) oriented in the second direction, respectively,
wherein the plurality of second electrodes includes third side surfaces oriented in the first direction, and fourth side surfaces (322) oriented in the second direction, respectively,
wherein the first separator covers at least a part of each of the first side surfaces or at least a part of each of the third side surfaces, and
wherein the second separator covers at least a part of each of the second side surfaces or at least a part of each of the fourth side surfaces.

3. The electronic device of claim 1 or 2, wherein the separator assembly includes a plurality of planes by folding the first separator and the second separator and at least one side portions of the plurality of planes are bonded.

4. The electronic device of any one of the previous claims, wherein each of the plurality of second electrodes is positioned between the first separator and the second separator, and
wherein each of the plurality of first electrodes is positioned between the first separator and the second separator.

5. The electronic device of any one of the previous claims, wherein each of the plurality of first electrodes includes a first upper surface (310a) and a first rear surface (310b) opposite to the first upper surface,
wherein each of the plurality of second electrodes includes a second upper surface (320a) and a second rear surface (320b) opposite to the second upper surface,
wherein the first separator includes a first surface (330a) and a second surface (330b) opposite to the first surface,
wherein the second separator includes a third surface (340a) and a fourth surface (340b) opposite to the third surface,
wherein the first surface of the first separator is disposed to face the first rear surface of the plurality of first electrodes, and the second upper surface of the plurality of second electrodes, and
wherein the third surface of the second separator is disposed to face the second rear surface of the plurality of second electrodes and the first upper surface of the plurality of first electrodes.

6. The electronic device of any one of the previous claims, wherein the plurality of through-holes include first through-holes (331a) configured to accommodate a first tab of one first electrode of the plurality of first electrodes, and second through-holes (331b) spaced apart from the first through-holes and configured to accommodate a first tab of another electrode of the plurality of first electrodes.

7. The electronic device of any one of the previous claims, wherein the first separator includes a first fusion part (333) positioned in the first direction with respect to the plurality of first electrodes and the plurality of second electrodes, and
wherein the second separator includes a second fusion part (343) positioned in the second direction with respect to the plurality of first electrodes and the plurality of second electrodes.

8. The electronic device of any one of the previous claims, wherein the first separator has a first length different from a second length of the second separator.

9. The electronic device of any one of the previous claims, wherein each of the plurality of first electrodes includes a positive-electrode substrate (318) and a positive-electrode mixture (319) surrounding at least a part of the positive-electrode substrate.

10. The electronic device of any one of the previous claims, wherein the positive-electrode substrate includes aluminum, and the positive-electrode mixture includes a lithium oxide.

11. The electronic device of any one of the previous claims, wherein each of the plurality of second electrodes includes a negative-electrode substrate (328) and a negative-electrode mixture (329) surrounding at least a part of the negative-electrode substrate.

12. The electronic device of any one of the previous claims, wherein the negative-electrode substrate includes at least one of nickel or copper, and
wherein the negative-electrode mixture includes at least one of graphite or a lithium titanium oxide.

13. The electronic device of any one of the previous claims, wherein the second separator, one first electrode of the plurality of first electrodes, the first separator, and one second electrode of the plurality of second electrodes are sequentially stacked.

14. The electronic device of any one of the previous claims, wherein the first separator comprises a first bending part (332) protecting a part of the first side surfaces (311) of each of the plurality of first electrodes and a part of the third side surfaces (321) of each of the plurality of second electrodes,
wherein the second separator comprises a second bending part (342) protecting a part of the second side surfaces (312) of each of the plurality of first electrodes and a part of the fourth side surfaces (322) of each of the plurality of second electrodes, and
wherein the first bending part and the second bending part are alternately disposed.

15. The electronic device of any one of the previous claims, wherein the separator comprises a non-conductive porous body comprising a pore.
